Europäisches Patentamt

European Patent Office

Office européen des brevets

(19)

(11) Publication number: **0 311 437**
**A2**

(12) # EUROPEAN PATENT APPLICATION

(21) Application number: 88309397.3

(51) Int. Cl.⁴: **G 01 G 19/413**

(22) Date of filing: 07.10.88

(30) Priority: 07.10.87 JP 253042/87
07.10.87 JP 253043/87
24.02.88 JP 41487/88

(43) Date of publication of application:
**12.04.89 Bulletin 89/15**

(84) Designated Contracting States: **DE FR GB SE**

(71) Applicant: **ISHIDA SCALES MFG. CO. LTD.**
**44, Shogoin Sannou-cho Sakyo-ku**
**Kyoto-shi Kyoto (JP)**

(72) Inventor: **Takemura, Kazuhiko**
**89-9 Kunobe Yasu-cho**
**Yasu-gun Shiga (JP)**

**Nakaoka, Kenichi c/o Shiga Factory**
**Ishida Scales Mfg. Co., Ltd 959-1, Shimomagari**
**Ritto-cho Kurita-gun Shiga (JP)**

(74) Representative: **Fane, Christopher Robin King et al**
**HASELTINE LAKE & CO. Hazlitt House 28 Southampton**
**Buildings Chancery Lane**
**London, WC2A 1AT (GB)**

(54) **Printing apparatus for printing labels.**

(57) Printing apparatus for printing labels comprises a plurality of weighing machines (b1,...,b6), each having a printer (7) and a processing control unit (3), interconnected by a transmission line (d) for mutual data transmission. Each of the weighing machines (b1,..b6) has a reader for reading a POP (point of purchase) label original and sending a read image signal to any one of the weighing machines in which the image signal is stored. In each weighing machine, the stored image data are printed on POP labels by the printers (7) of the weighing machines. The read image signal from the reader may be edited for size enlargement, reduction, and other editing purposes. Instead of storing the read image signal from the reader, it may be printed directly onto labels by the printers. Such printing apparatus can enable POP labels of different designs and formats to be printed more easily than in the prior art.

Fig. 2.

Fig. 3.

EP 0 311 437 A2

## Description

### PRINTING APPARATUS FOR PRINTING LABELS

The present invention relates to printing apparatus for printing labels.

Generally, electronic scales enter and store various data on articles of merchandise such as unit prices, tares, and so forth in a controller through a key input unit such as a ten-key pad. By entering a call number, the weight of an article represented by the call number, and other pieces of information such as a unit price, a total price, and the like are displayed. Many electronic scales have a printer for printing such article data and also other data such as the name of the article, the date of sale, etc. on a label, and issuing the printed label.

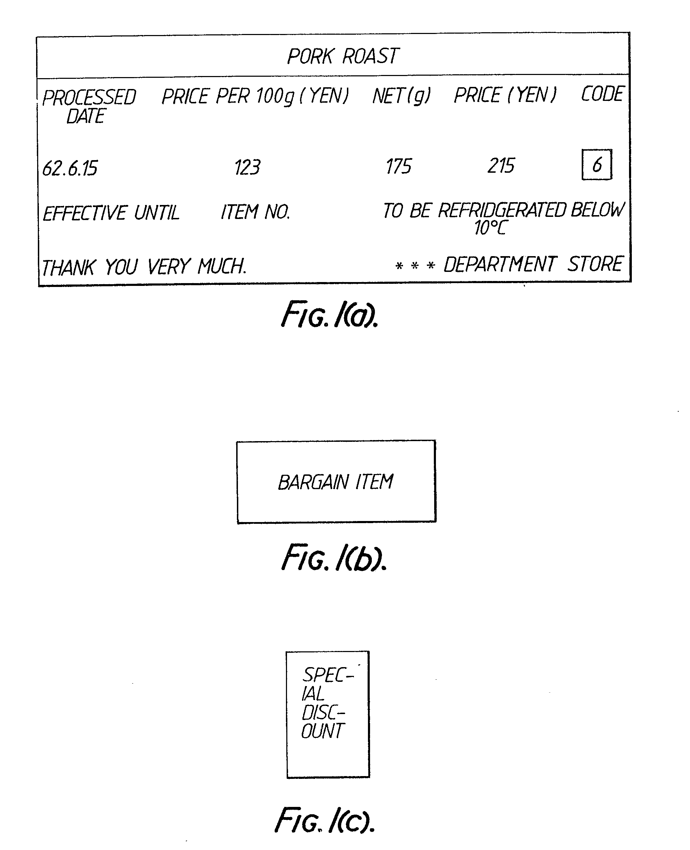

One label which will be applied to a tray or the like carrying an article of merchandise is printed in a given format with necessary pieces of information such as the name of an article, the processed date, the unit price, the weight, the total price, etc., as shown in Fig. 1(a) of the accompanying drawings. Other printed labels, as shown in Figs. 1(a) and 1(b), have certain characters printed on labels of certain shape, format, or design, and are applied directly to articles or trays thereof. Such POP (point of purchase) labels are available in many various formats and printed with many various characters. Therefore, they are prepared and applied mostly manually, making the label preparing process complex and requiring a large amount of manual labor.

Accordingly, it is desirable to provide printing apparatus for enabling labels, such as POP labels, to be printed more easily in a wide range of various different formats and with many various characters, with a view to reducing the amount of manual intervention required.

According to an embodiment of the present invention there is provided printing apparatus comprising a plurality of weighing machines each having a printer and a processing control unit, a transmission line interconnecting the weighing machines for transmitting data therebetween, and means for reading a label original and applying a read image signal to any one of the weighing machines in which the image signal is stored. In each weighing machine, the stored image data are printed on labels by the printers of the weighing machines.

With the above arrangement, various labels such as POP labels of different designs and formats can be printed by the printers of the weighing apparatus. Therefore, the procedure for preparing POP labels can be simplified.

According to another embodiment of the present invention there is provided printing apparatus comprising reading means for reading image data from an original, data processing means for processing printing data produced from the image data, display means for displaying the image data, input means for entering an edit command for the image data based on the displayed image data, memory means for storing the printing data, and printing means for printing the printing data.

With such apparatus a wide variety of designs and data can be printed on labels and receipts more easily. Colour printing is also made possible by specifying a color while the image data are being edited. Therefore, data to be printed can be processed by many different functions.

According to a further embodiment of the present invention there is provided printing apparatus comprising an image sensor for reading a graphic or character pattern as image data, a memory for storing the image data, means for reading the image data from the memory and printing the image data on a label, and copying means transferring the image data read by the image sensor directly to a printer for copying the image data on a receipt sheet. When a copy mode is selected by a mode selector key, the image data from the image sensor can sent directly to the printer without being stored in the memory, and copied on the receipt sheet.

Reference will now be made, by way of example, to the accompanying drawings, in which:

Figs. 1(a) through 1(c) are views of various POP labels;

Fig. 2 is a block diagram of an electronic scale with a printer;

Fig. 3 is a block diagram of printing apparatus according to a first embodiment of the present invention;

Figs. 4(a) and 4(b) are views of POP labels different from those shown in Figs. 1(a) through 1(c);

Fig. 5 is a block diagram of printing apparatus according to a second embodiment of the present invention;

Figs. 6(a) through 6(f) are views showing various functions;

Fig. 7 is a flowchart of a process sequence including steps ranging from the step of entering image data to the step of printing image data;

Fig. 8 is a flowchart of a process sequence for editing image data;

Fig. 9 is a block diagram of printing apparatus according to a third embodiment of the present invention;

Fig. 10 is a perspective view of the printing apparatus of the third embodiment;

Fig. 11 is a flowchart of a process sequence of the printing apparatus according to the third embodiment;

Fig. 12 is a perspective view of a roll of label base;

Fig. 13 is a view of a POP label different from those shown in Figs. 1(a) through 1(c) and Figs. 4(a) and 4(b); and

Figs. 14(a) and 14(b) are views showing characters, by way of example, which can be printed on POP labels.

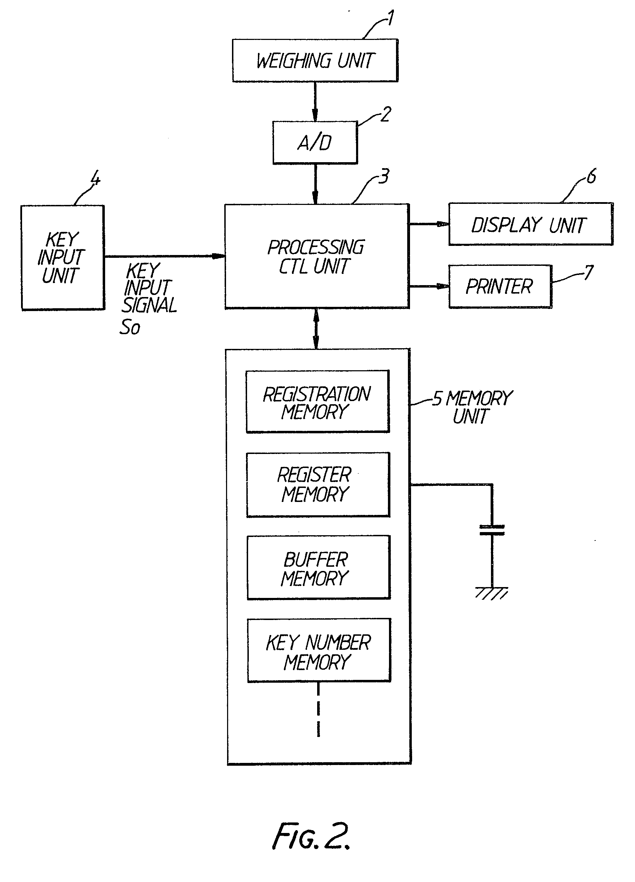

Fig. 2 shows in block form an electronic scale having a printer, to which the principles of the present invention are applicable.

As shown in Fig. 2 the electronic scale includes a weighing unit 1 comprising a load cell or the like, an A/D converter 2 for converting an analog weight value into a digital weight value, a processing control unit 3 comprising a microcomputer or the like, a key input unit 4 having a ten-key pad and function keys, a memory unit 5 comprising a registration memory, a register memory, a buffer memory, a key number memory, and other memories, a display unit 6, and a printer 7.

The electronic scale operates as follows: A key input signal So for initiating a registration mode is entered through the key input unit 4 into the processing control unit 3, and various pieces of information for an article of merchandise to be weighed, such as a call number, an article code, letter codes indicating the name of the article, a unit price, a tare, etc., are entered into the registration memory in the memory unit 5. When weighing the article, the call number is entered via the ten-key pad to fetch the information from the registration memory. When a weight signal which has been produced by weighing the article and converted into a digital signal is applied to the processing control unit 3, the total price is calculated thereby from the fetched unit price and the applied weight, and the weight, the unit price, the calculated total weight, etc. are displayed on the display unit 6. The printer 7 prints the article name, the processed date, the unit price, and other data, as shown in Fig. 1(a), in given areas on a label.

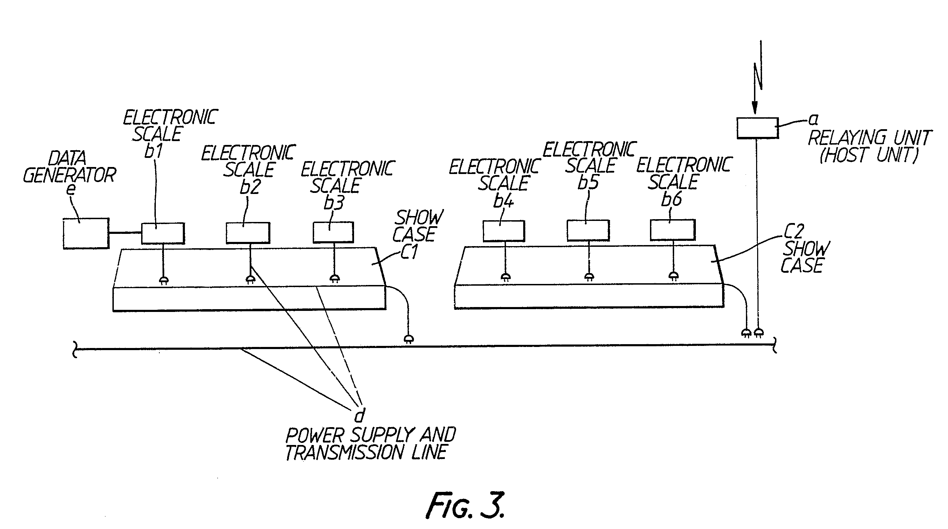

Fig. 3 shows, in block form, printing apparatus according to a first embodiment of the present invention. The printing apparatus includes a relaying, or host, unit a, electronic scales b1 through b6 each constructed as shown in Fig. 2, showcases (shop counters) c1, c2, a power supply and transmission line d, and a data generator e. In the illustrated arrangement, the electronic scales are disposed near the showcases positioned in a wide store space for the convenience of customers or consumers. The electronic scales are interconnected by a common transmission line for registering the article data, as referred to above, and transmitting various data. These data are processed by a host computer connected via the relaying unit or directly by such a host computer. However, these relaying unit and host computer may be dispensed with, and any one of the electronic scales may be employed as a host computer. Alternatively, data may be transmitted between the electronic scales for a registering process, a totaling process, or other processes.

The data generator e may be an image scanner or the like for reading printing data such as various formats and designs as shown in Fig. 1(a) from originals and sending them to the printers of the electronic scales. The data generator e comprises a CPU, an interface, an image RAM, and other components. Each of the electronic scale printers is operable to issue a POP label which will be applied to a corresponding article by the operator.

For printing many different messages as shown in Figs. 1(b) and 1(c) by way of example in the printing apparatus of the first embodiment, respective originals are prepared, then read by the image scanner, and printed on labels of prescribed formats by the printers. To produce message-printed labels, many originals have to be prepared to meet different article types and label uses. Since such message-printed labels have many sizes and forms which differ from store to store, a large number of originals are required to produce the required labels, and thus inventory control for such originals is complex.

When manually reading a message or printing data from an original with an image scanner, a positional deviation tends to occur, and printed labels may not be accurately registered.

To produce labels or receipts having a message printing space or area as shown in Figs. 4(a) and 4(b), the printing procedure is tedious and time-consuming since a message and a character pattern have to be printed separately.

A printing system according to a second embodiment of the present invention is intended to eliminate the above shortcomings by employing a graphic display for editing printing data.

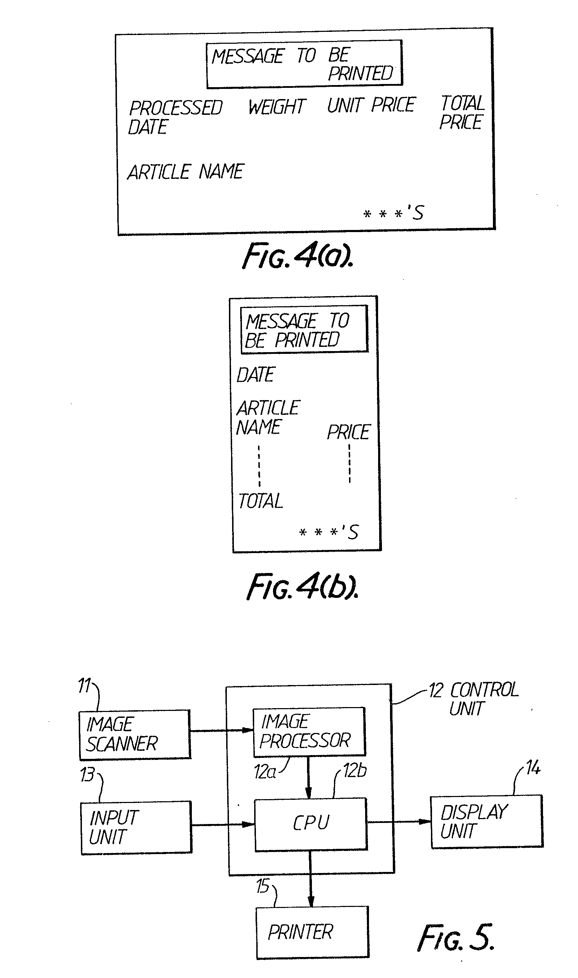

Fig. 5 illustrates in block form printing apparatus according to a second embodiment of the present invention. The printing apparatus includes an image scanner 11 for reading an original, a control unit 12 comprising an image processor 12a and a CPU 12b having memories, an input unit 13 such as a keyboard, a display unit 14 comprising a CRT, a graphic display, or the like, and a printer 15.

Operation of the printing apparatus of the second embodiment is as follows:

Printing data read from an original by the image scanner 11 are processed by the image processor 12a and the CPU 12b of the control unit 12 and then displayed on the display unit 14. The printing system is equipped with the following functions which can be selectively performed to edit an image input signal displayed on the display unit 14, by the operator who uses functions keys and the like in the input unit 13 for editing purpose:

    (a) Enlarging and reducing functions;
    (b) Moving function;
    (c) Deleting function;
    (d) Character inserting function;
    (e) Copying function; and
    (f) Color specifying function.

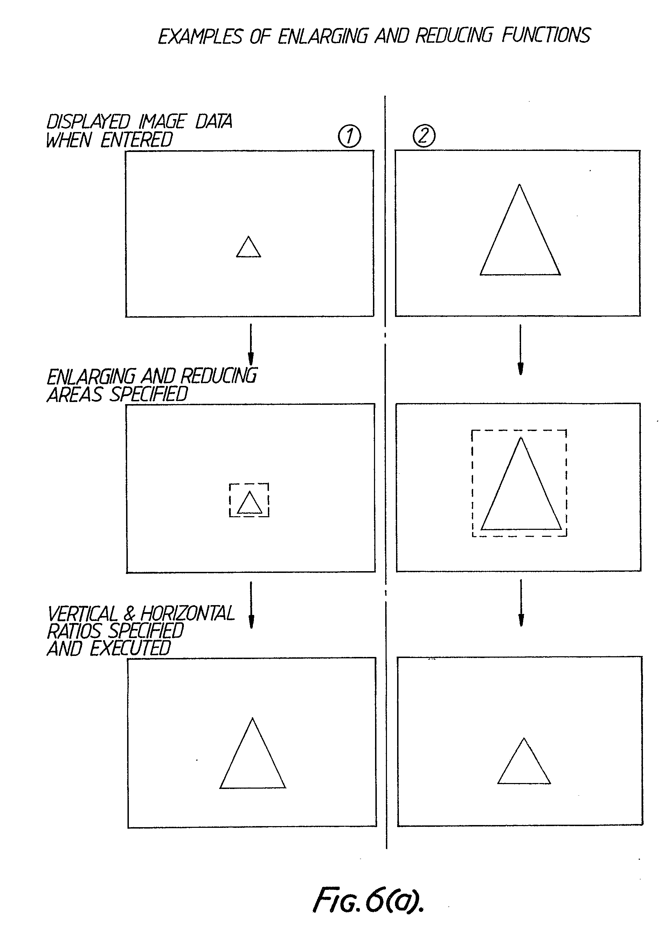

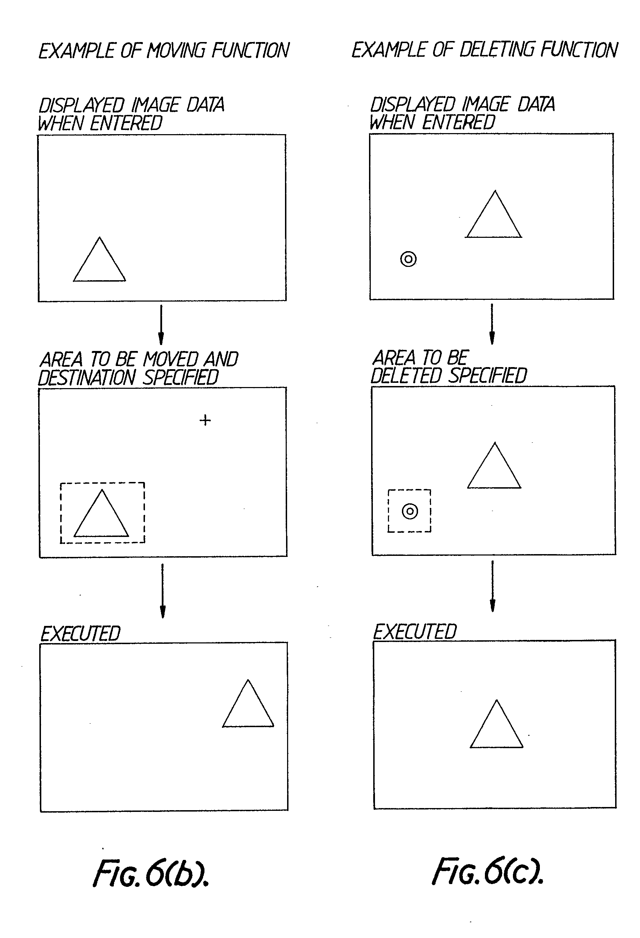

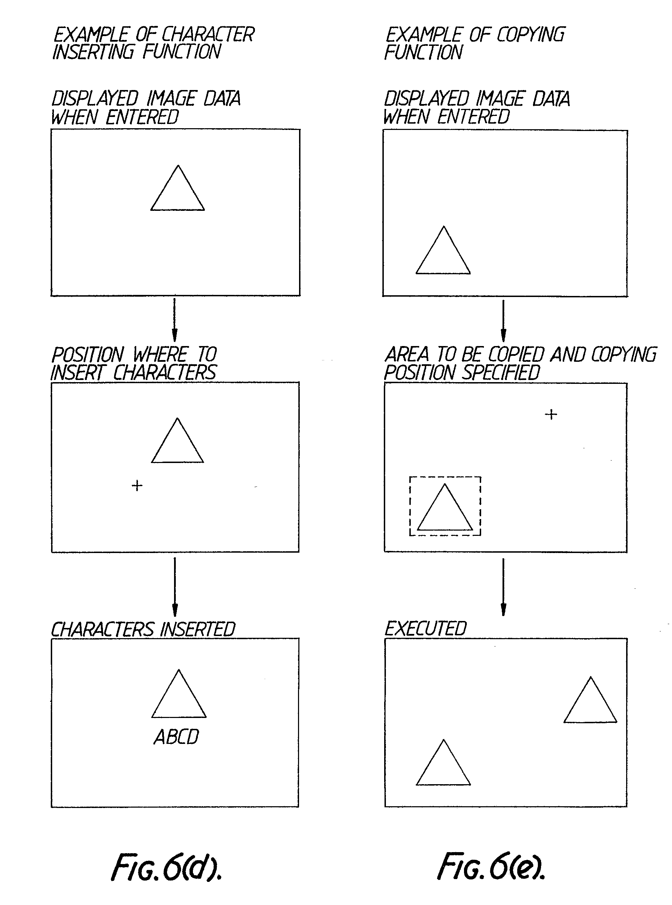

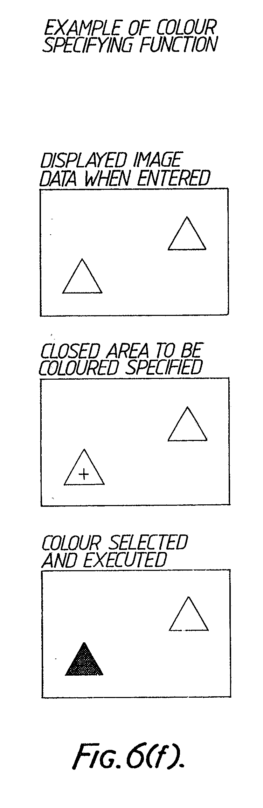

These functions will be described below with reference to Figs. 6(a) through 6(f).

(a) Enlarging and reducing functions:

Fig. 6(a) shows an enlarging function in (1) and a reducing or compressing function (2). After image data, shown at the uppermost level, have been displayed on the display unit 14, an enlarging or reducing area is specified as shown at the intermediate level, and then an enlarging or reducing ratio of vertcal and horizontal dimensions is specified to produce an image based on the enlarged or reduced data as shown at the lowermost level. The enlarged or reduced data are registered, and when forming printing data, the registered data are called, and the printer 15 is energized to print the data.

(b) Moving function:

As shown at the intermediate level in Fig. 6(b), an area to be moved is specified, and a destination to which image data are to be moved is indicated by "+". Then an execution key is depressed to move the image data to the indicated destination as shown at the lowermost level in Fig. 6(b).

(c) Deleting function:
As illustrated at the intermediate level in Fig. 6(c), an area to be deleted is specified, and then the execution key is depressed to delete the image data in the specified area as shown at the lowermost level in Fig. 6(c).

(d) Character inserting function:
As shown at the intermediate level in Fig. 6(d), a character inserting position is indicated by a cursor. Then, the insertion of desired characters into the position is executed to add the characters to the image data as shown at the lowermost level in Fig. 6(d).

(e) Copying function:
As shown at the intermediate level in Fig. 6(e), an area to be copied is specified, and then a position where it is to be copied is indicated by a cursor. Then, the execution key is depressed to copy the image data in the desired position as shown at the lowermost level in Fig. 6(e).

(f) Color specifying function:
As shown at the intermediate level in Fig. 6(f), a closed area to be colored is indicated by a cursor, and then the execution key is depressed to display the indicated closed area in a specified color such as red, for example, as shown at the lowermost level in Fig. 6(f). For printing color data, a thermal or thermal-transfer printer is employed, and the printing temperature is changed to print characters in red on a black label. The color specifying function is also capable of printing a message in a specified color on a multicolor print label at a given area thereon.

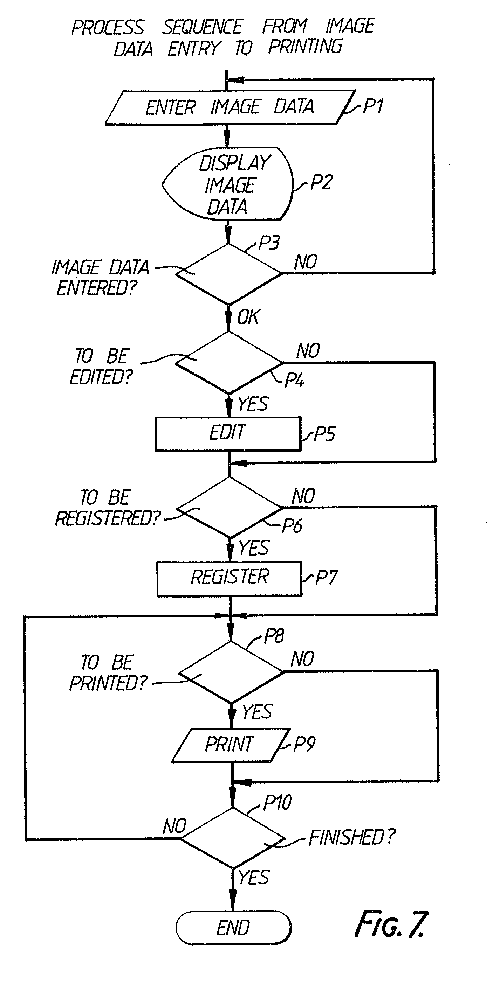

Fig. 7 shows a process sequence of steps ranging from the step of entry of image data to the step of printing the entered image data.

First, image data are entered in a step P1, and then displayed in a step P2. After confirming that the image data entry is accepted or completed in a step P3, a step P3 conforms whether the image data should be edited or not. If the image data should be edited, then an editing process is executed in a step P5, which is followed by a step P6 that checks if the displayed data should be registered or not. If the displayed data should be registerd, then a registration process is executed in a step P7. Thereafter, a step P8 confirms whether the displayed data should be printed or not. If the displayed data should be printed, then a printing process is carried out in a step P9. Then, a step P10 checks if the printing process is finished or not.

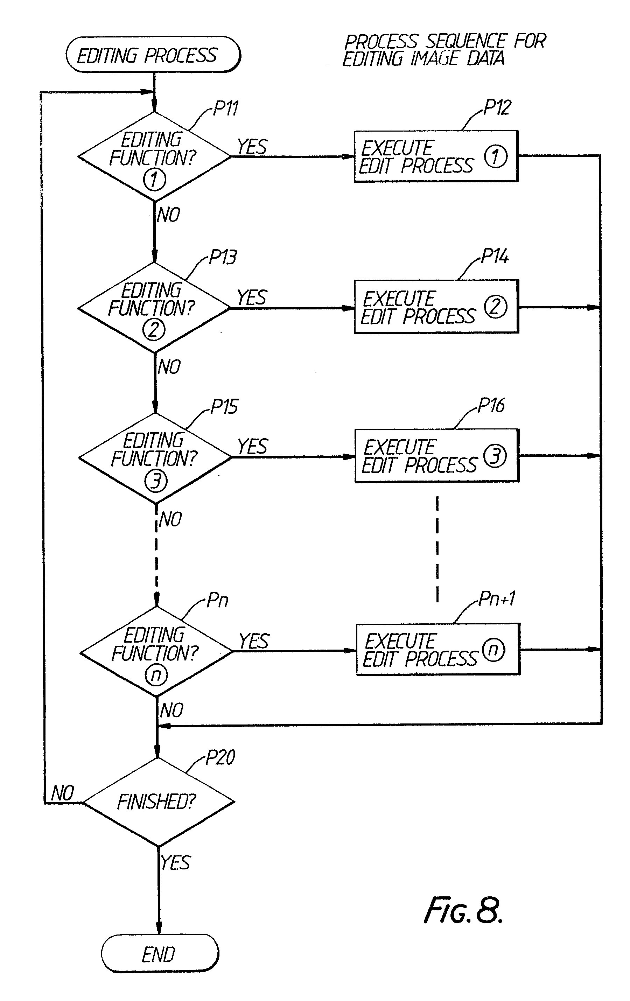

Fig. 8 illustrates an editing process sequence for editing image data. The editing process includes editing steps (1) through (n) which correspond respectively to the editing functions (a) through (f) which have been described above with reference to Figs. 6(a) through 6(f). After starting the editing process, steps P11, P13, P15, ... Pn successively check if the editing functions (1), (2), ... (n) should be performed or not. Steps P12, P14, P16, ... Pn+1 execute the corresponding editing functions.

Specifying a color for a label in the above editing functions will be described in greater detail below. A label can be printed in color by:
(1) employing multicolor thermal paper, or
(2) relying upon a color thermal-transfer method. A color can be specified by:
(1) entering color image data through a color input image scanner; or
(2) entering monochromatic data through a monochromatic input image scanner and thereafter specifying a color.

In the second embodiment, printing data are processed by the combination of the image scanner, the control unit, and the display unit. However, the image scanner may be dispensed with, the printer may be combined with a control unit comprising a microcomputer or the like, and the display unit may be arranged to schematically display image data stored in a RAM.

Printing apparatus according to the second embodiment can offer the following advantages:
(1) Since image data from an original can be edited to produce a label or a receipt, a small number of originals can effectively be utilized.
(2) A wide variety of sizes of labels and receipts can be produced by relying upon the editing functions such as enlarging and reducing functions. Therefore, originals used can be uniformized in size, and their inventory control is facilitated.
(3) Since any positional deviation experienced when entering image data can be corrected by the moving function, a printed label is finished to a nicety.
(4) It is possible to superpose image data and character data, so that labels and receipts can be produced with ease.
(5) Messages or characters can be printed to meet the formats of labels.
(6) The color specifying function allows image data to be printed in color on a label at a desired position thereon.

In producing a POP label according to each of the above embodiments, data stored in the buffer memory are read and printed by the printer. Therefore, storage of data of various patterns requires a corresponding memory capacity. For producing a POP label containing new information, the memory capacity has to be increased. Accordingly, the memory used for storing data requires a large capacity.

Moreover, there are instances wherein certain information presented on a newspaper or a magazine with respect to an article may be copied and given to a customer for sales promotion in a distribution channel. To copy such information, a dedicated copying machine is required which increases expenses.

Printing apparatus according to a third embodiment of the present invention has a copying function operatively associated with an image scanner for achieving advantages that the first and second embodiments do not have.

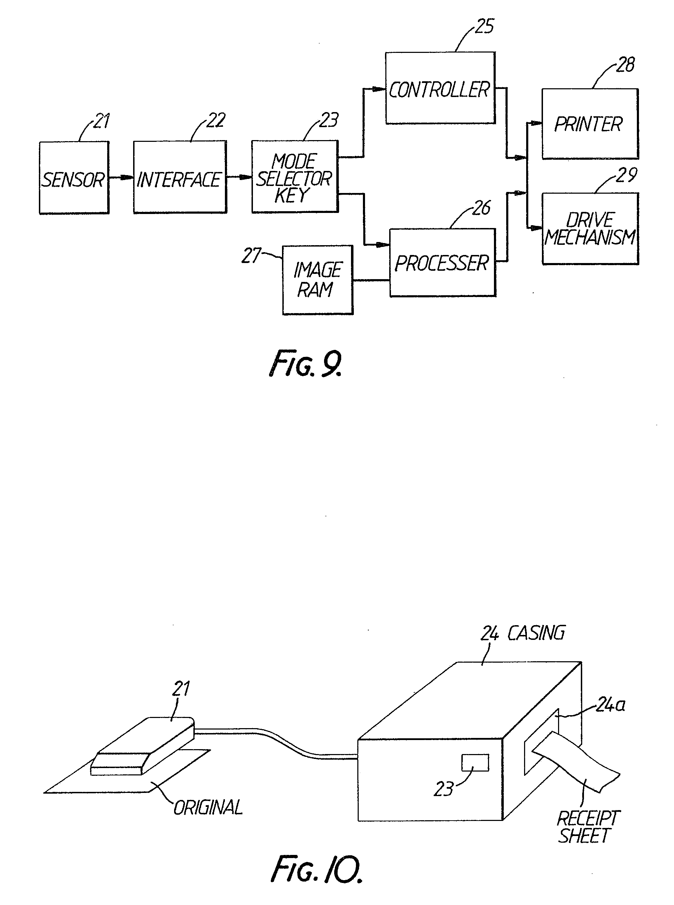

Printing apparatus according to the third embodiment will be described below with reference to Figs. 9, 10, and 11.

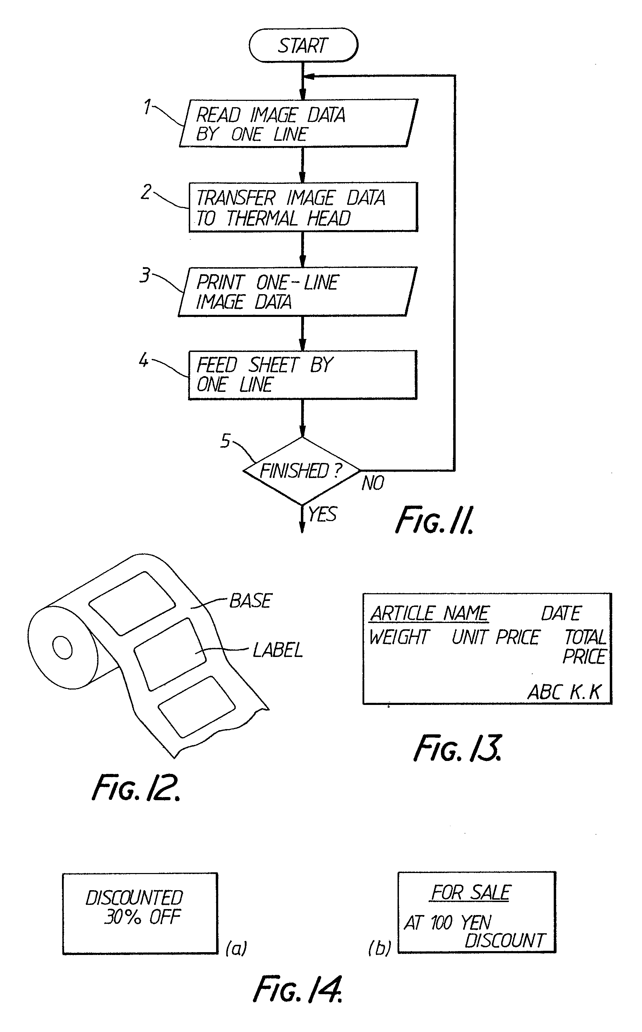

As shown in Fig. 9, the printing apparatus includes an image sensor 21 comprsing a semiconductor light-emitting device and a semiconductor light detector for scanning a sheet to read image data, sentences, or the like. A signal indicative of shades and highlights which have been read and based on the distance scanned is applied from the image sensor 21 to an interface 22. A mode selector key 23 mounted on a casing 24 (Fig. 10) is operated to select a copy mode or a normal mode. When the copy mode is selected, a signal from the interface 22 is fed to a controller 25. When the normal mode is selected, a signal from the interface 22 is applied to a processor 26.

The controller 25 sends the signal from the image sensor 21 via the interface 22 as a copying signal to a printer 28 and a drive mechanism 29 for printing the data on a receipt sheet.

The processor 26 has an image RAM 27 for storing the signal read by the image sensor 21 as data to be printed on a label. When printing the label, the stored data are sent to the printer 28 and the drive mechanism 29 and printed on the label applied to a label base.

The printer 28 has a thermal head or the like for printing a label or a receipt in response to printing data applied thereto. The drive mechanism 29 serves to unroll and feed a certain length a rolled label base on which labels are applied, as shown in Fig. 12, or a rolled receipt sheet, in response to a command from the processor 26 or the controller 25. The printed label or receipt is discharged from the printer out of an outlet slot 24a defined in the casing 24.

Operation of printing apparatus according to the third embodiment will be described with reference to a process sequence shown in Fig. 11.

For performing a copying function using a receipt sheet, the sensor 21 is placed on an original to be copied and scans one line of the original to read image data in a step 1. The read image data are transmitted from the interface 22 via the mode selector key 23 and the controller 25 to the printer 28 and the drive mechanism 29 in a step 2. Upon receipt of the image data, the printer 28 prints one line on a receipt sheet in a step 3, and the drive mechanism 29 then feeds the receipt sheet one line in a step 4. The steps 1 through 4 are repeated until a step 5 determines that the copying process is finished, after which control goes to a next process. The copying process is not limited by the length of the original to be copied, but can infinitely be continued until it is stopped by a stop command.

According to the third embodiment, when the copy mode is selected by the mode selector key 23, therefore, the image data read by the image sensor 21 can be transferred to the printer 28, without being temporarily stored in a buffer memory, for printing a receipt sheet. Consequently, in the copy mode, the memory needed may be of a storage capacity large enough to store a copying program, and hence the memory capacity may be small. Since no separate copying machine is required, expenses which would otherwise result frcm use of such copying machine are not necessary. Information necessary for sales promotion can easily be copied on a receipt sheet.

The controller 25 and the processor 26 may be combined together. Some or all of the embodiments described above may also be combined together.

Although certain preferred embodiments have been shown and desribed, it should be understood that many changes and modifications may be made therein without departing from the scope of the appended claims.

## Claims

1. A printing system for use with a weighing apparatus for weighing and displaying an article, the weighing apparatus having a label printing device including a printer for printing a label with information including at least a weight value and a price, and an article name stored in memory means, said printing system comprising:
image input means for reading image data from a label original and entering the read image data;
display means for displaying the image data;
input means for entering an edit command for the image data based on the displayed image data;
data processing means for editing the image data into printing data;
memory means for storing the printing data; and
printing means for printing the printing data with the printer of the weighing apparatus.

2. A printing system according to claim 1, further including copying means for reading the image data from the label original and transmitting the read image data directly to said printer to print the image data on a receipt sheet.

3. A printing system according to claim 2, including a plurality of weighing apparatus which are interconnected by a data transmission line.

4. A printing system according to claim 3, further including selector means controllable by a mode selector key for selecting one of a mode to print the image data on the label and a mode a print the image data on the receipt sheet.

5. A printing system for use with a weighing apparatus for weighing and displaying an article, the weighing apparatus having a label printing device including a printer for printing a label with information including at least a weight value and a price, and an article name stored in memory means, said printing system comprising:
a plurality of weighing apparatus each having a printer and a processing control unit;
a transmission line interconnecting said weighing apparatus for transmitting data therebetween;
image input means connected to said weighing apparatus or said transmission line for reading image data from a label original and entering the read image data into said weighing apparatus; display means for displaying the image data; input means for entering an edit command for the image data based on the displayed image data; data processing means for editing the image data into printing data;

memory means for storing the printing data; and

printing means for printing the printing data with the printers of the weighing apparatus.

6. A printing system according to claim 5, further including copying means for reading the image data from the label original and transmitting the read image data directly to said printers to print the image data on receipt sheets.

| PORK ROAST | | | | |
|---|---|---|---|---|
| PROCESSED DATE | PRICE PER 100g (YEN) | NET(g) | PRICE (YEN) | CODE |
| 62.6.15 | 123 | 175 | 215 | 6 |
| EFFECTIVE UNTIL | ITEM NO. | | TO BE REFRIDGERATED BELOW 10°C | |
| THANK YOU VERY MUCH. | | | * * * DEPARTMENT STORE | |

FIG. I(a).

BARGAIN ITEM

FIG. I(b).

SPEC-
IAL
DISC-
OUNT

FIG. I(c).

FIG. 2.

Fig. 3.

MESSAGE TO BE
PRINTED

PROCESSED    WEIGHT   UNIT PRICE    TOTAL
DATE                                PRICE

ARTICLE NAME

                                    * * *'S

*FIG.4(a).*

MESSAGE TO
BE PRINTED

DATE

ARTICLE
NAME              PRICE
    ¦               ¦
    ¦               ¦
TOTAL

         * * *'S

*FIG.4(b).*

11
IMAGE
SCANNER   →   IMAGE
              PROCESSOR          12 CONTROL
                                    UNIT

              12a      12b
13
INPUT                           14
UNIT      →   CPU      →   DISPLAY
                          UNIT

15
PRINTER        *FIG.5.*

EXAMPLES OF ENLARGING AND REDUCING FUNCTIONS

DISPLAYED IMAGE DATA WHEN ENTERED ① ②

ENLARGING AND REDUCING AREAS SPECIFIED

VERTICAL & HORIZONTAL RATIOS SPECIFIED AND EXECUTED

FIG. 6(a).

EXAMPLE OF MOVING FUNCTION

EXAMPLE OF DELETING FUNCTION

DISPLAYED IMAGE DATA
WHEN ENTERED

DISPLAYED IMAGE DATA
WHEN ENTERED

AREA TO BE MOVED AND
DESTINATION SPECIFIED

AREA TO BE
DELETED SPECIFIED

EXECUTED

EXECUTED

Fig. 6(b).

Fig. 6(c).

EP 0 311 437 A2

EXAMPLE OF CHARACTER
INSERTING FUNCTION

DISPLAYED IMAGE DATA
WHEN ENTERED

POSITION WHERE TO
INSERT CHARACTERS

CHARACTERS INSERTED

ABCD

**Fig. 6(d).**

EXAMPLE OF COPYING
FUNCTION

DISPLAYED IMAGE DATA
WHEN ENTERED

AREA TO BE COPIED AND COPYING
POSITION SPECIFIED

EXECUTED

**Fig. 6(e).**

EXAMPLE OF COLOUR
SPECIFYING FUNCTION

DISPLAYED IMAGE
DATA WHEN ENTERED

CLOSED AREA TO BE
COLOURED SPECIFIED

COLOUR SELECTED
AND EXECUTED

FIG. 6(f).

PROCESS SEQUENCE FROM IMAGE
DATA ENTRY TO PRINTING

ENTER IMAGE DATA — P1

DISPLAY IMAGE DATA — P2

P3
IMAGE DATA ENTERED? — NO
OK

TO BE EDITED? — NO
P4
YES

EDIT — P5

TO BE REGISTERED? — NO
P6
YES

REGISTER — P7

P8
TO BE PRINTED? — NO
YES

PRINT — P9

P10
NO — FINISHED?
YES

END

FIG. 7.

PROCESS SEQUENCE FOR EDITING IMAGE DATA

Fig.8.

Fig. 9.

Fig. 10.

START

1 — READ IMAGE DATA BY ONE LINE

2 — TRANSFER IMAGE DATA TO THERMAL HEAD

3 — PRINT ONE-LINE IMAGE DATA

4 — FEED SHEET BY ONE LINE

5 — FINISHED ?

NO

YES

*Fig. II.*

BASE

LABEL

*Fig. 12.*

ARTICLE NAME     DATE
WEIGHT    UNIT PRICE    TOTAL PRICE

ABC K.K

*Fig. 13.*

DISCOUNTED 30% OFF

(a)

FOR SALE

AT 100 YEN DISCOUNT

(b)

*Fig. 14.*